(19) Europäisches Patentamt / European Patent Office / Office européen des brevets

(11) **EP 3 867 723 B1**

(12) **EUROPÄISCHE PATENTSCHRIFT**

(45) Veröffentlichungstag und Bekanntmachung des Hinweises auf die Patenterteilung:
**16.08.2023   Patentblatt 2023/33**

(21) Anmeldenummer: **19790137.4**

(22) Anmeldetag: **30.09.2019**

(51) Internationale Patentklassifikation (IPC):
**G05D 1/02** *(2020.01)*        **G01S 17/00** *(2020.01)*

(52) Gemeinsame Patentklassifikation (CPC):
**G05D 1/0289; G05D 1/0234; G05D 1/0255**

(86) Internationale Anmeldenummer:
**PCT/EP2019/025324**

(87) Internationale Veröffentlichungsnummer:
**WO 2020/078581 (23.04.2020 Gazette 2020/17)**

(54) **ANLAGE MIT ERSTEM MOBILTEIL UND MIT EINEM WEITEREN MOBILTEIL**

SYSTEM, HAVING A FIRST MOBILE PART AND AN ADDITIONAL MOBILE PART

INSTALLATION COMPRENANT UNE PREMIÈRE PARTIE MOBILE ET UNE AUTRE PARTIE MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2018   DE 102018008131**

(43) Veröffentlichungstag der Anmeldung:
**25.08.2021   Patentblatt 2021/34**

(73) Patentinhaber: **SEW-EURODRIVE GmbH & Co. KG 76646 Bruchsal (DE)**

(72) Erfinder:
• **HUA, Zhidong**
  **76646 Bruchsal (DE)**
• **BÜRGEL, Jonas, Felix**
  **76137 Karlsruhe (DE)**
• **LINDENFELSER, Michael**
  **76646 Bruchsal (DE)**
• **WANJEK, Andreas**
  **68753 Waghäusel (DE)**
• **AYHAN, Serdal**
  **69234 Dielheim (DE)**
• **SCHÄFER, Thomas**
  **76689 Karlsdorf-Neuthard (DE)**

(56) Entgegenhaltungen:
DE-U1-202012 006 267     US-A1- 2005 060 069
US-A1- 2011 196 580

**Beschreibung**

Die Erfindung betrifft eine Anlage mit erstem Mobilteil und mit einem weiteren Mobilteil.

Es ist allgemein bekannt, dass Mobilteile, wie beispielsweise fahrerlose Transportfahrzeuge in einer Anlage selbsttätig fahren, insbesondere um intralogistische Aufträge zu erledigen.

Aus der DE 10 2004 014 281 A1 ist ein Flächenbearbeitungssystem bekannt.

Aus der DE 10 2016 001 678 A1 ist ein Verfahren und Gerät zur Bestimmung der dreidimensionalen Pose starrer Körper unter Verwendung opto-akustischer Codemultiplex- und Trägerphasendistanzmessungen bekannt.

Aus der US 2006/0136097 A1 ist ein Robotersystem bekannt.

Aus der US 6 680 688 B1 ist ein Messsystem und ein Verfahren zur Bestimmung der Distanz eines Objekts mittels eines Übertragungsmediums mit verschiedenen Geschwindigkeiten bekannt.

Aus der US 2011/196580 A1 ist als nächstliegender Stand der Technik eine kabellose Verkehrsinformationsanzeige bekannt.

Aus der US 2005/060069 A1 ist ein Steuerverfahren für ein Fahrzeug bekannt.

Der Erfindung liegt daher die Aufgabe zugrunde, eine Anlage weiterzubilden, wobei die Sicherheit verbessert werden soll und/oder die Anlage effizient betreibbar sein soll.

Erfindungsgemäß wird die Aufgabe bei der Anlage nach den in Anspruch 1 angegebenen Merkmalen gelöst.

Wichtige Merkmale der Erfindung bei der Anlage sind, dass die Anlage mit erstem Mobilteil und mit einem weiteren Mobilteil ausgeführt ist.,

wobei das erste Mobilteil eine erste Steuerung aufweist und das weitere Mobilteil eine weitere Steuerung,

wobei das erste Mobilteil einen Lichtsender aufweist, der von der ersten Steuerung ansteuerbar ist,

wobei das erste Mobilteil einen Schallsender aufweist, der von der ersten Steuerung zeitgleich zum Lichtsender ansteuerbar ist,

wobei das weitere Mobilteil einen Lichtempfänger aufweist, der mit der weiteren Steuerung verbunden ist,

wobei das weitere Mobilteil einen Schallempfänger aufweist, der mit der weiteren Steuerung verbunden ist,

wobei die weitere Steuerung zur Bestimmung der zeitlichen Differenz zwischen dem Eintreffen eines vom Schallsender ausgesendeten Schallsignals am Schallempfänger und dem Eintreffen eines vom Lichtsender ausgesendeten Lichtsignals am Lichtempfänger geeignet ausgeführt ist.

Von Vorteil ist dabei, dass die Entfernung schnell und ohne besonderen Aufwand bestimmbar ist. Somit ist eine Kollisionsvermeidung in einfacher Weise realisierbar. Denn sobald ein Mindestabstandswert unterschritten wird, ist ein Reduzieren der Fahrgeschwindigkeit eines oder beider der Mobilteile bewirkbar und/oder ein Ändern der Fahrrouten einleitbar, so dass keine Kollision eintritt. Beispielsweise ist eines oder jedes der Mobilteile jeweils bei Unterschreiten des Mindestabstandswertes mit einer Veränderung des Lenkwinkels, beispielsweise jeweils nach rechts, um einen positiven Winkelbetrag eine erste Zeitspannung weiterverfahrbar, wonach eine nachfolgende zweite Zeitspanne lang ein Regler den Lenkwinkel als Stellgröße derart stellt, dass der erfasste Abstand auf den Mindestabstand hin geregelt wird, wonach daraufhin wieder das jeweilige Mobilteil auf seine zur Ausführung des intralogistischen Auftrags vom Zentralrechner vorgegebene Bahnkurve hin geregelt wird.

Bei einer vorteilhaften Ausgestaltung ist das erste Mobilteil und das weitere Mobilteil jeweils auf einer Verfahrfläche der Anlage verfahrbar. Von Vorteil ist dabei, dass jedes Mobilteil einen von einem Zentralrechner vorgegebenen intralogistischen Auftrag entlang einer vom Zentralrechner vorgegebenen Bahnkurve, also Fahrstrecke, ausführt.

Bei einer vorteilhaften Ausgestaltung sind das erste und das zweite Mobilteil schienengeführt. Von Vorteil ist dabei, dass eine Kollisionsvermeidung realisierbar ist, indem beim Unterschreiten eines Mindestabstands entweder das Mobilteil gestoppt wird oder derart geregelt wird, dass der Mindestabstand als Ziel der Regelung vorgegeben wird.

Bei einer vorteilhaften Ausgestaltung ist das Lichtsignal moduliert, insbesondere zur Datenübertragung und/oder zur Übertragung einer Identitätsinformation. Von Vorteil ist dabei, dass das Lichtsignal nicht nur zur Bestimmung des Abstands sondern auch zur Datenübertragung einsetzbar ist.

Bei einer vorteilhaften Ausgestaltung fungiert als Lichtsender ein erster Transceiver für Licht des ersten Mobilteils,
als Lichtempfänger ein weiterer Transceiver für Licht des weiteren Mobilteils fungiert. Von Vorteil ist dabei, dass eine nicht nur unidirektionale, sondern auch bidirektionale Datenübertragung ausführbar ist.

Bei einer vorteilhaften Ausgestaltung fungiert als Schallsender ein erster Ultraschall-Transceiver des ersten Mobilteils,
wobei als Schallempfänger ein weiterer Ultraschall-Transceiver des weiteren Mobilteils fungiert. Von Vorteil ist dabei, dass mittels des Ultraschalls nicht nur unidirektional, sondern auch bidirektional Daten übertragbar sind, insbesondere Identitätsinformation des jeweiligen Mobilteils.

Wichtige Merkmale bei dem Verfahren zum Bestimmen eines Abstandes, insbesondere zwischen einem ersten Mobilteil und einem weiteren Mobilteil einer Anlage, wobei von einem Lichtsender einer ersten Vorrichtung ein Lichtsignal abgesendet wird,

wobei von einem Schallsender der ersten Vorrichtung ein Schallsignal zeitgleich zum Lichtsignal abgesendet wird,

wobei die Zeitdifferenz $T\_diff$ zwischen dem Eintreffen des Lichtsignals an einem Lichtempfänger einer zweiten Vorrichtung und dem Eintreffen des Schallsignals an einem Schallempfänger der zweiten Vorrichtung bestimmt wird,

wobei aus der Zeitdifferenz $T\_diff$ der Abstand zwischen der ersten und der zweiten Vorrichtung bestimmt wird, insbesondere der Abstand zwischen dem Schallempfänger und dem Schallsender bestimmt wird. Von Vorteil ist dabei, dass der Abstand in einfacher Weise bestimmbar ist. Zusätzlich ist aber auch eine Datenübertragung mit Licht und/oder Schall möglich.

Somit ist eine Kollisionsvermeidung in einfacher Weise realisierbar. Denn sobald ein Mindestabstandswert unterschritten wird, ist ein Reduzieren der Fahrgeschwindigkeit eines oder beider der Mobilteile bewirkbar und/oder ein Ändern der Fahrrouten einleitbar, so dass keine Kollision eintritt. Beispielsweise ist eines oder jedes der Mobilteile jeweils bei Unterschreiten des Mindestabstandswertes mit einer Veränderung des Lenkwinkels, beispielsweise jeweils nach rechts, um einen positiven Winkelbetrag eine erste Zeitspannung weiterverfahrbar, wonach eine nachfolgende zweite Zeitspanne lang ein Regler den Lenkwinkel als Stellgröße derart stellt, dass der erfasste Abstand auf den Mindestabstand hin geregelt wird, wonach daraufhin wieder das jeweilige Mobilteil auf seine zur Ausführung des intralogistischen Auftrags vom Zentralrechner vorgegebene Bahnkurve hin geregelt wird.

Bei einer vorteilhaften Ausgestaltung ist das erste Teil ein erstes Mobilteil und das zweite Teil ein zweites Mobilteil. Von Vorteil ist dabei, dass die Abstandsbestimmung zur Kollisionsvermeidung verwendbar ist und außerdem eine Datenübertragung ausführbar ist.

Bei einer anderen vorteilhaften Ausgestaltung ist das erste Teil ein Mobilteil und das zweite Teil ein stationär angeordnetes Teil oder das erste Teil ist ein stationär angeordnetes Teil und das zweite Teil ein Mobilteil ist. Von Vorteil ist dabei, dass nicht nur eine Kollisionsvermeidung vom Mobilteil aus ausführbar ist, indem das stationär angeordnete Teil umfahrbar ist, sondern auch eine Datenübertragung ausführbar ist.

Bei einer vorteilhaften Ausgestaltung ist das erste Teil ein stationär angeordnetes Teil und das zweite Teil ein stationär angeordnetes Teil. Von Vorteil ist dabei, dass durch Bestimmen des Abstandes die relative Lage der beiden Teile genau bestimmbar ist und in einer Karte der Anlage hinterlegbar ist.

**Erfindungsgemäß** wird das Lichtsignal und/oder das Schallsignal moduliert, insbesondere zur Datenübertragung,
insbesondere wobei ein Halbduplexverfahren verwendet wird. Von Vorteil ist dabei, dass Abstandsbestimmung und Datenübertragung gleichzeitig ausführbar sind.

Bei einer vorteilhaften Ausgestaltung wird eine Adressierungsinformation und/oder Identitätsinformation auf dem Lichtsignal und auf dem Schallsignal aufmoduliert,
insbesondere wobei ein Vollduplexverfahren verwendet wird. Von Vorteil ist dabei, dass sicherstellbar ist, dass das Schallsignal und das Lichtsignal vom selben Mobilteil gesendet wurden. Somit ist eine hohe Sicherheit bei der Abstandsbestimmung gewährleistbar.

Bei einer vorteilhaften Ausgestaltung wird der Abstand S zwischen dem ersten Teil und dem weiteren Teil bestimmt gemäß

$$S = T\_diff * v\_Schall - 1 / c$$

wobei c die Lichtgeschwindigkeit und $v\_Schall$ die Schallgeschwindigkeit ist. Von Vorteil ist dabei, dass eine präzise Abstandsbestimmung ausführbar ist.

**Erfindungsgemäß** weist der Abstand S zwischen dem ersten Teil und dem weiteren Teil insbesondere näherungsweise bestimmt gemäß

$$S = T\_diff * v\_Schall$$

wobei c die Lichtgeschwindigkeit und $v\_Schall$ die Schallgeschwindigkeit ist. Von Vorteil ist dabei, dass eine einfache näherungsweise Bestimmung des Abstandes ausführbar ist, wobei nur ein geringer Rechenaufwand notwendig ist.

Bei einer vorteilhaften Ausgestaltung wird statt des Lichtsignals ein elektromagnetisches Wellensignal anderer Frequenz verwendet,
wobei statt des Lichtsenders ein Sender für das Wellensignal verwendet wird und statt des Lichtempfängers ein Empfänger für das Wellensignal verwendet wird. Von Vorteil ist dabei, dass auch ein Funksignal oder ein WLAN-Signal verwendbar ist.

Bei einer vorteilhaften Ausgestaltung wird insbesondere vom Schallempfänger, die Schallamplitude erfasst und, insbesondere von der Steuerung, für den bestimmten Abstand S aus einer Tabelle, insbesondere durch Interpolation, ein Wert für Schallamplitude bestimmt wird und die erfasste Schallamplitude überwacht wird auf ein Überschreiten eines zulässigen Maßes an Abweichung. Von Vorteil ist dabei, dass eine Plausibilitätskontrolle des bestimmten Abstands ausführbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

In der Figur 1 ist ein erfindungsgemäßes System mit einem ersten Mobilteil 1 und mit einem zweiten Mobilteil 11 gezeigt.

In der Figur 2 sind die zur Bestimmung der Entfernung S zwischen den beiden Mobilteilen (1, 11) verwendeten Signalverläufe schematisch skizziert.

In der Figur 3 ist die Verwendung des Systems in einem ersten Schritt eines Halbduplexmode-Lichtkommunikationsverfahrens schematisch dargestellt.

In der Figur 4 ist der zweite Schritt des Halbduplexkommunikationsverfahrens dargestellt.

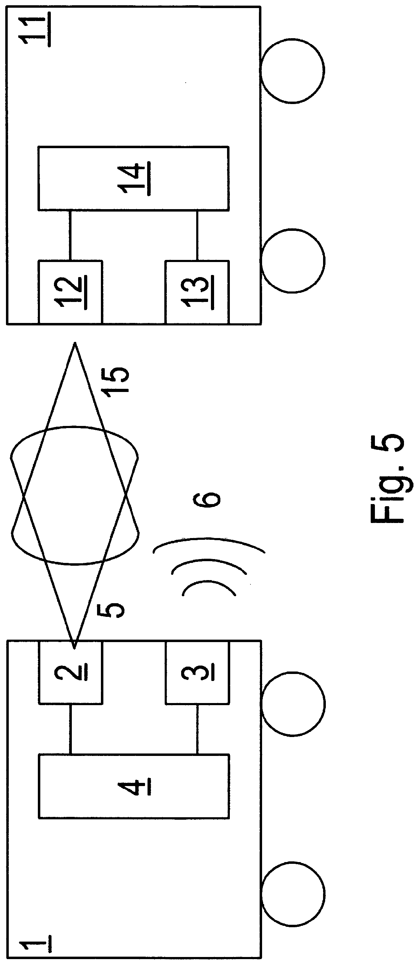

In der Figur 5 ist die Verwendung des Verfahrens zwischen zwei Mobilteilen 1 und 11 skizziert.

In der Figur 6 ist die Verwendung des Verfahrens zwischen einem Mobilteil 1 und einem stationäre Teil 11 dargestellt

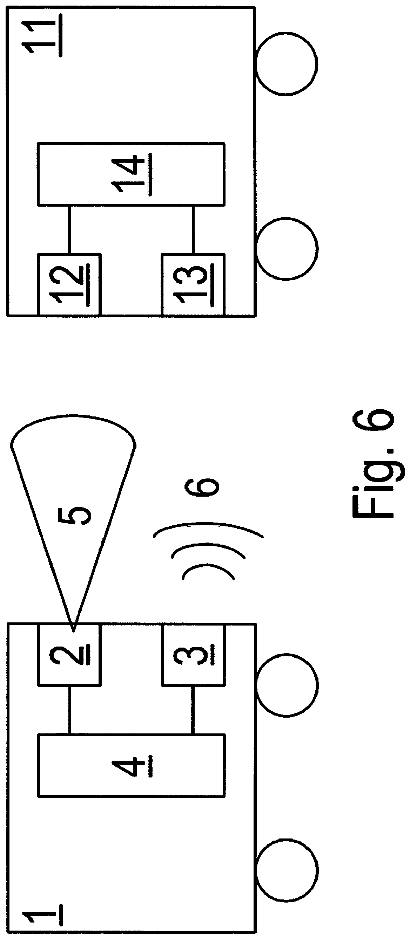

In der Figur 6 ist die Verwendung des Verfahrens zwischen zwei stationären Teilen 1 und 11 skizziert.

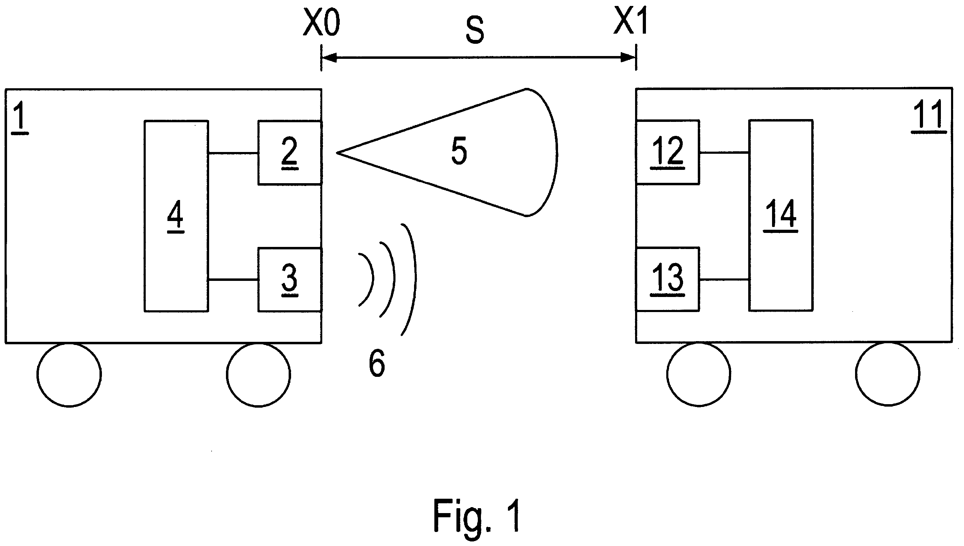

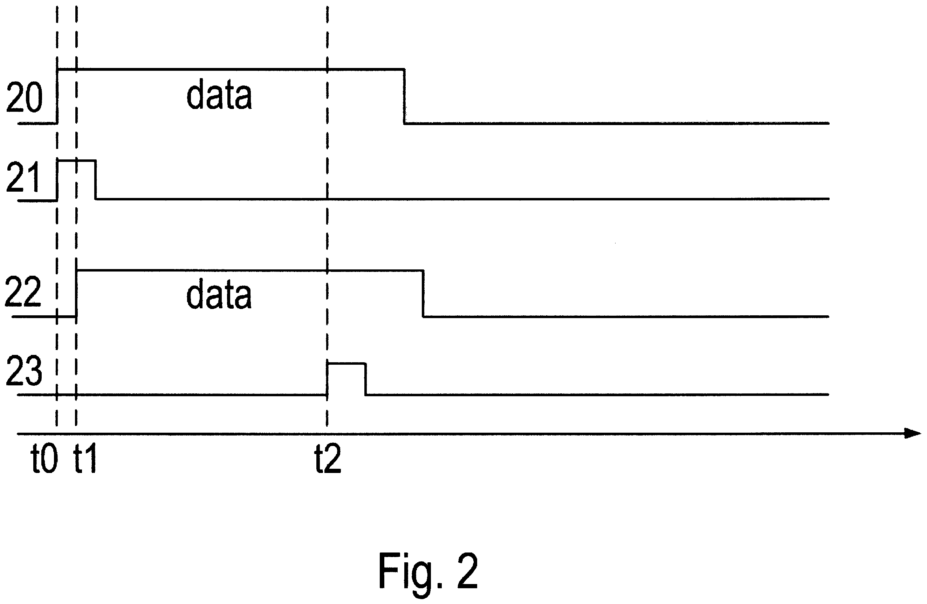

Wie in den Figuren 1 und 2 dargestellt, weist eine erfindungsgemäße Anlage ein erstes Mobilteil 1 auf, welches selbsttätig in der Anlage verfahrbar ist. Hierzu weist das Mobilteil 1 eine Steuerung 4 auf, welche den Antrieb des Mobilteils 1 derart steuert, dass eine beispielsweise von einem Zentralrechner der Anlage dem Mobilteil 1 vorgegebene, intralogistische Aufgabe ausgeführt wird. Dies ist beispielsweise ein Transport einer vom Mobilteil l1 aufgenommenen Last von einer ersten Position zu einer zweiten Position.

Da in der Anlage weitere Mobilteile 11 vorhanden sind, wird zur Vermeidung von Kollision oder zur optimalen Ausnutzung der Verfahrfläche mittels Verbundfahren der Abstand zu einem weiteren Mobilteil 11 bestimmt. Zum Ausführen einer solchen Verbundfahrt regelt die Steuerung den erfassten Abstand S auf einen Sollwert hin, indem sie den Antrieb als Stellglied entsprechend ansteuert. Somit fahren dann beide Mobilteile 1 und 11 auf demselben Streckenabschnitt mit jeweils derselben Geschwindigkeit in konstantem Abstand hintereinander.

Die Steuerung 4 des ersten Mobilteils 1 ist mit einem Lichtsender 2, insbesondere LED, verbunden, wobei das zweite Mobilteil 11 einen Lichtempfänger 12 aufweist, so dass eine Datenübertragung zwischen den beiden Mobilteilen 1 und 11 ermöglicht ist.

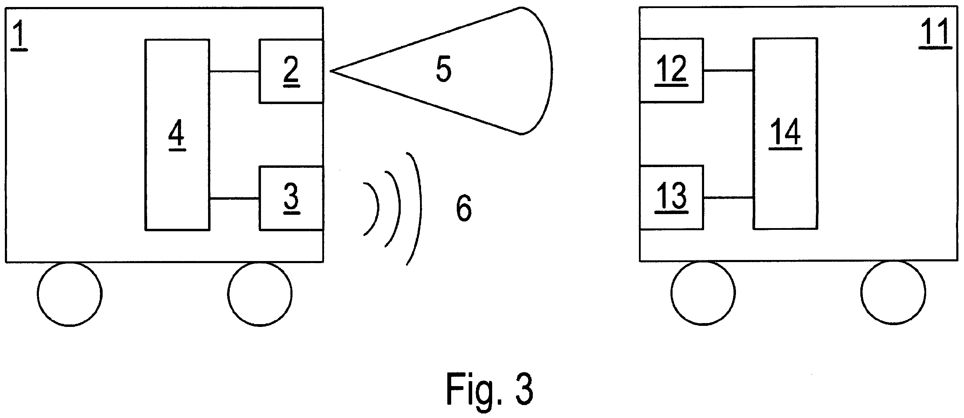

Wie in Figur 3 gezeigt, wird in einem ersten Schritt des als Halbduplexverfahren ausgeführten Datenübertragungsverfahrens ein Lichtsignal 5 gesendet und dieses vom Lichtempfänger 12 empfangen. Somit werden also Daten vom ersten Mobilteil 1 zum weiteren Mobilteil 11 übertragen.

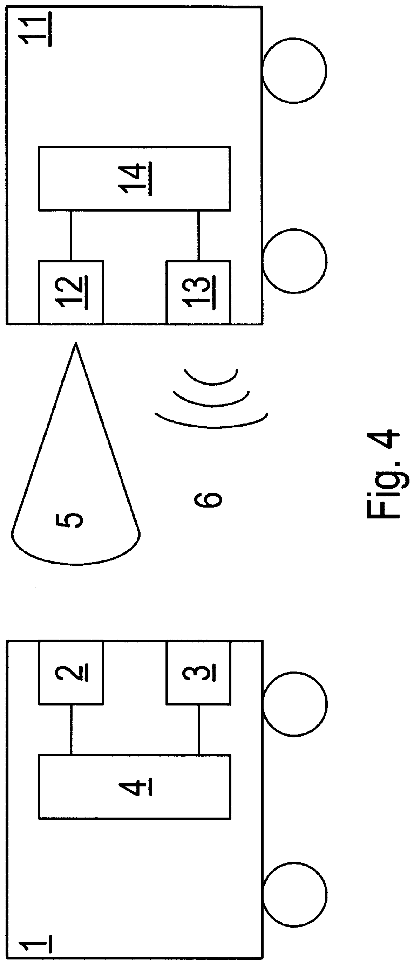

Wie in Figur 4 gezeigt, wird in einem auf den ersten Schritt nachfolgenden zweiten Schritt des als Halbduplexverfahren ausgeführten Datenübertragungsverfahrens ein Lichtsignal 6 von einem Lichtsender des weiteren Mobilteils gesendet. Dabei ist ein der Lichtempfänger 12 als Lichttransceiver ausführbar und somit ein Senden und Empfangen ausführbar.

Wie in Figur 2 gezeigt, wird im ersten Schritt zum Zeitpunkt t0 das Lichtsignal 20 vom Lichtsender 2 des ersten Mobilteils 1 und gleichzeitig auch das Schallsignal 21 vom Schallsender 3, insbesondere Ultraschallsender, des ersten Mobilteils 1 gesendet.

Danach wird zum Zeitpunkt t1 das Lichtsignal detektiert vom Lichtempfänger 12 des zweiten Mobilteils 11, wie aus dem ausgangsseitigen Signalverlauf 22 des Lichtempfängers 12 des zweiten Mobilteils 11 in Figur 2 ersichtlich ist.

Zu dem noch späteren Zeitpunkt t2 wird dann auch das Schallsignal 23 vom Schallempfänger 13 detektiert.

Die Lichtsignallaufdauer T_Licht beträgt t1 - t0. Die Schallsignallaufdauer T_Schall beträgt t2 - t0.

Die im zweiten Mobilteil 11 gemessene Zeitdifferenz T_diff = t2 - t1 wird zur Bestimmung der Distanz S zwischen den Schallsendern 3 und 13 verwendet gemäß:

$$S = T\_diff * v\_Schall - 1 / c$$

wobei c die Lichtgeschwindigkeit und v_Schall die Schallgeschwindigkeit ist.

Das Schallsignal weist dabei keine aufmodulierte Information auf. Jedoch wird das abgestrahlte Lichtsignal (5, 20) zur Informationsübertragung verwendet, indem es entsprechend moduliert erzeugt wird. In Figur 2 ist dieser modulierte nicht-verschwindende Bereich mit "data" gekennzeichnet.

Dabei sollte der Schallsender 3 und der Lichtsender 2 möglichst auf derselben Position angeordnet sein

Zur Bestimmung des Abstands ist auch wichtig, dass Schall 6 vom Schallsender 3 zum Schallempfänger 13 direkt und ebenso Licht vom Lichtsender 2 direkt zum Lichtempfänger 12 gelangt, insbesondere also im schnellsten Ausbreitungsweg jeweils keine Reflexion auftritt.

Bei weiteren erfindungsgemäßen Ausführungsbeispielen wird die Amplitude des vom Schallempfänger 13 erfassten Schallsignals 6 erfasst. In einem Speicher der Steuerung ist außerdem eine Tabelle hinterlegt, welche jeweiligen Abstandswerten jeweilige Schallamplituden zuordnet. Somit ist für den bestimmten Abstand aus der Tabelle ein Wert, insbesondere ein interpolierter Wert für Schallamplitude bestimmbar und die erfasste Amplitude auf eine unzulässig hohe Abweichung vom Wert, insbesondere vom interpolierten Wert, überwachbar.

Falls also beispielsweise das Licht 5 durch eine transparente Scheibe vom Schallsender 2 zum Schallempfänger 12 gelangt und der Schall vom Schallsender 3 unter der Scheibe am Boden reflektiert zu dem Schallempfänger 13 gelangt, wird zwar ein Abstand bestimmt, der aber wesentlich vom Ausbreitungspfad des Schalls 6 bestimmt ist. Aber die zu diesem längeren Weg gehörende Schallamplitude weist dann ein unzulässig hohes Maß an Abweichung zu dem aus der Tabelle bestimmten Wert auf, da insbesondere die Reflexion die Amplitude stark verringert.

Bei weiteren erfindungsgemäßen Ausführungsbeispielen wird dem modulierten Licht auch eine auf das erste Mobilteil bezogene Identitätsinformation beigefügt, welche von der Steuerung dekodierbar ist,

Außerdem ist auch der gesendete Schall 6 mit einer Identitätsinformation modulierbar. Auf diese Weise ist eine Verwechslung mit von anderen Mobilteilen ausgesendeten Schallsignalen 6 vermeidbar. Das detektierte Lichtsignal 5 und das detektierte Schallsignal sind somit eineindeutig miteinander verknüpft und daher eine sichere Bestimmung des Abstandes ausführbar.

**Bezugszeichenliste**

    1 erstes Mobilteil
    2 Lichtsender
    3 Schallsender
    4 Steuerung
    5 Licht
    6 Schall
    11 zweites Mobilteil
    12 Lichtempfänger
    13 Schallempfänger
    14 Steuerung
    15 Licht
    20 vom Lichtsender 2 gesendetes Lichtsignal
    21 vom Schallsender 3 gesendetes Schallsignal
    22 vom Lichtempfänger empfangenes Lichtsignal
    23 vom Schallempfänger 13 empfangenes Schallsignal
    X0 Position des ersten Mobilteils
    X1 Position des zweien Mobilteils

S Entfernung zwischen erstem Mobilteil 1 und zweiten Mobilteil 11 data mit Information modulierter Bereich

**Patentansprüche**

1. Anlage mit erstem Mobilteil und mit einem weiteren Mobilteil,

    wobei das erste Mobilteil eine erste Steuerung aufweist und das weitere Mobilteil eine weitere Steuerung,
    wobei das erste Mobilteil (1) einen Lichtsender (2) aufweist, der von der ersten Steuerung ansteuerbar ist,
    wobei das Lichtsignal des Lichtsenders moduliert ist zur Übertragung einer auf das erste Mobilteil bezogenen Identitätsinformation, welche von der Steuerung dekodierbar ist,
    wobei das erste Mobilteil einen Schallsender (3) aufweist, der von der ersten Steuerung zeitgleich zum Lichtsender ansteuerbar ist,
    wobei das weitere Mobilteil (11) einen Lichtempfänger (12) aufweist, der mit der weiteren Steuerung verbunden ist,
    wobei das weitere Mobilteil einen Schallempfänger (13) aufweist, der mit der weiteren Steuerung verbunden ist,
    wobei die weitere Steuerung zur Bestimmung der zeitlichen Differenz zwischen dem Eintreffen eines vom Schallsender ausgesendeten Schallsignals am Schallempfänger und dem Eintreffen eines vom Lichtsender ausgesendeten Lichtsignals am Lichtempfänger geeignet ausgeführt ist,
    wobei die Identitätsinformation auf dem Lichtsignal und auf dem Schallsignal aufmoduliert wird,
    wobei ein Vollduplexverfahren oder ein Halbduplexverfahren verwendet wird,
    wobei der Abstand S zwischen dem ersten Teil und dem weiteren Teil bestimmt wird gemäß

$$S = T\_diff * v\_Schall$$

    wobei v_Schall die Schallgeschwindigkeit ist,
    wobei T_diff die bestimmte Zeitdifferenz zwischen dem Eintreffen des Lichtsignals an dem Lichtempfänger der zweiten Vorrichtung und dem Eintreffen des Schallsignals an dem Schallempfänger der zweiten Vorrichtung ist,
    wobei der Schallempfänger geeignet ausgeführt ist, die Schallamplitude zu erfassen und, insbesondere von der Steuerung, für den bestimmten Abstand S aus einer Tabelle, welche jeweiligen Abstandswerten jeweilige Schallamplituden zuordnet,

einen Wert für Schallamplitude, insbesondere durch Interpolation, zu bestimmen und eine Plausibilitätskontrolle des bestimmten Abstandes S durchzuführen, indem die erfasste Schallamplitude überwacht wird auf ein Überschreiten eines zulässigen Maßes an Abweichung.

2. Anlage nach Anspruch 1, wobei das erste Mobilteil und das weitere Mobilteil jeweils auf einer Verfahrfläche der Anlage verfahrbar ist.

3. Anlage nach Anspruch 1, wobei das erste und das zweite Mobilteil schienengeführt sind.

4. Anlage nach einem der vorangegangenen Ansprüche, wobei als Lichtsender ein erster Transceiver für Licht des ersten Mobilteils fungiert, als Lichtempfänger ein weiterer Transceiver für Licht des weiteren Mobilteils fungiert.

5. Anlage nach einem der vorangegangenen Ansprüche, wobei als Schallsender ein erster Ultraschall-Transceiver des ersten Mobilteils fungiert, als Schallempfänger ein weiterer Ultraschall-Transceiver des weiteren Mobilteils fungiert.

6. Verfahren zum Bestimmen eines Abstandes, insbesondere zwischen einem ersten Mobilteil und einem weiteren Mobilteil einer Anlage nach einem der vorangegangenen Ansprüche,

wobei von einem Lichtsender einer ersten Vorrichtung ein Lichtsignal abgesendet wird,
wobei von einem Schallsender der ersten Vorrichtung ein Schallsignal zeitgleich zum Lichtsignal abgesendet wird,
wobei die Zeitdifferenz T_diff zwischen dem Eintreffen des Lichtsignals an einem Lichtempfänger einer zweiten Vorrichtung und dem Eintreffen des Schallsignals an einem Schallempfänger der zweiten Vorrichtung bestimmt wird,
wobei aus der Zeitdifferenz T_diff der Abstand zwischen der ersten und der zweiten Vorrichtung bestimmt wird, insbesondere der Abstand zwischen dem Schallempfänger und dem Schallsender bestimmt wird,
wobei der Abstand S zwischen dem ersten Teil und dem weiteren Teil bestimmt wird gemäß

$$S = T\_diff * v\_Schall$$

wobei v_Schall die Schallgeschwindigkeit ist,
wobei T_diff die bestimmte Zeitdifferenz zwischen dem Eintreffen des Lichtsignals an dem Lichtempfänger der zweiten Vorrichtung und dem Eintreffen des Schallsignals an dem Schallempfänger der zweiten Vorrichtung ist,
wobei eine auf das erste Mobilteil bezogene Identitätsinformation, welche von der Steuerung dekordierbar ist, auf dem Lichtsignal und auf dem Schallsignal aufmoduliert wird,
wobei ein Vollduplexverfahren verwendet wird, insbesondere vom Schallempfänger, die Schallamplitude erfasst wird und,
insbesondere von der Steuerung, für den bestimmten Abstand S aus einer Tabelle, welche jeweiligen Abstandswerten jeweilige Schallamplituden zuordnet, ein Wert für Schallamplitude, insbesondere durch Interpolation, bestimmt wird und eine Plausibilitätskontrolle des bestimmten Abstandes S durchgeführt wird, indem die erfasste Schallamplitude überwacht wird auf ein Überschreiten eines zulässigen Maßes an Abweichung.

7. Verfahren nach Anspruch 6, wobei das erste Teil ein erstes Mobilteil ist und das zweite Teil ein zweites Mobilteil oder das erste Teil ein Mobilteil und das zweite Teil ein stationär angeordnetes Teil ist oder das erste Teil ein stationär angeordnetes Teil und das zweite Teil ein Mobilteil ist, oder das erste Teil ein stationär angeordnetes Teil und das zweite Teil ein stationär angeordnetes Teil ist.

8. Verfahren nach Anspruch 6 oder 7, wobei das Lichtsignal und/oder das Schallsignal moduliert wird insbesondere zur Datenübertragung, insbesondere wobei ein Halbduplexverfahren verwendet wird.

9. Verfahren nach einem der Ansprüche 6 bis 8,

wobei statt des Lichtsignals ein elektromagnetisches Wellensignal anderer Frequenz verwendet wird,
wobei statt des Lichtsenders ein Sender für das Wellensignal verwendet wird und statt des Lichtempfängers ein Empfänger für das Wellensignal verwendet wird.

## Claims

1. Facility comprising a first mobile component and comprising a further mobile component, wherein the first mobile component has a first controller and the further mobile component has a further controller,

wherein the first mobile component (1) has a light transmitter (2) that can be actuated by the first controller,
wherein the light signal of the light transmitter is modulated in order to transmit a piece of identification information that is related to the first mobile component and can be decoded by the controller,
wherein the first mobile component has a sound transmitter (3) that can be actuated by the first controller at the same time as the light transmitter,
wherein the further mobile component (11) has a light receiver (12) that can be connected to the further controller,
wherein the further mobile component has a sound receiver (13) that can be connected to the further controller,
wherein the further controller is suitably configured for determining the time difference between the arrival at the sound receiver of a sound signal emitted by the sound transmitter and the arrival at the light receiver of a light signal emitted by the light transmitter,
wherein the identification information is modulated onto the light signal and onto the sound signal,
wherein a full-duplex method or a half-duplex method is used,
wherein the distance S between the first component and the further component is determined in accordance with

$$S = T\_diff * v\_sound$$

where v_sound is the speed of sound,
where T_diff is the determined time difference between the arrival of the light signal at the light receiver of the second device and the arrival of the sound signal at the sound receiver of the second device,
wherein the sound receiver is suitably configured for detecting the amplitude of the sound, and for determining, for the determined distance S, a value for the sound amplitude from a table, in particular using the controller, in particular by interpolation, said table assigning particular sound amplitudes to particular distance values, and for carrying out a plausibility check on the determined distance S by monitoring the detected sound amplitude in case it exceeds a permitted degree of deviation.

2. Facility according to claim 1, wherein the first mobile component and the further mobile component can each travel on a travel surface of the facility.

3. Facility according to claim 1, wherein the first and the second mobile component are rail-borne.

4. Facility according to any of the preceding claims, wherein a first transceiver for light of the first mobile component acts as the light transmitter, and a further transceiver for light of the further mobile component acts as the light receiver.

5. Facility according to any of the preceding claims, wherein a first ultrasonic transceiver of the first mobile component acts as the sound transmitter, and a further ultrasonic transceiver of the further mobile component acts as the sound receiver.

6. Method for determining a distance, in particular between a first mobile component and a further mobile component of a facility according to any of the preceding claims,

wherein a light signal is sent by a light transmitter of a first device,
wherein a sound signal is sent by a sound transmitter of the first device at the same time as the light signal,
wherein the time difference T_diff between the arrival of the light signal at a light receiver of a second device and the arrival of the sound signal at a sound receiver of the second device is determined,
wherein the distance between the first and the second device, in particular the distance between the sound receiver and the sound transmitter, is determined from the time difference T_diff,
wherein the distance S between the first component and the further component is determined in accordance with

$$S = T\_diff * v\_sound$$

where v_sound is the speed of sound,
where T_diff is the determined time difference between the arrival of the light signal at the light receiver of the second device and the arrival of the sound signal at the sound receiver of the second device,
wherein a piece of identification information that is related to the first mobile component and can be decoded by the controller is modulated onto the light signal and onto the sound signal,
wherein a full-duplex method is used,
the amplitude of the sound is detected, in particular by the sound receiver, and, for the determined distance S, a value for the sound amplitude is determined from a table, in particular by the controller, in particular by interpolation, said table assigning particular sound amplitudes to particular distance values, and a plausibility check is carried out on the determined distance S by monitoring the detected sound amplitude in case it exceeds a permitted degree of deviation.

**7.** Method according to claim 6, wherein the first component is a first mobile component and the second component is a second mobile component, or the first component is a mobile component and the second component is an immovably arranged component, or the first component is an immovably arranged component and the second component is a mobile component, or the first component is an immovably arranged component and the second component is an immovably arranged component.

**8.** Method according to claim 6 or claim 7, wherein the light signal and/or the sound signal is/are modulated, in particular for the purpose of data transmission, in particular wherein a half-duplex method is used.

**9.** Method according to any of claims 6 to 8, wherein an electromagnetic wave signal of a different frequency is used instead of the light signal, wherein a transmitter for the wave signal is used instead of the light transmitter, and a receiver for the wave signal is used instead of the light receiver.

**Revendications**

**1.** Installation comprenant une première partie mobile et une partie mobile supplémentaire,

le première partie mobile présentant une première commande et la partie mobile supplémentaire présente une commande supplémentaire, le première partie mobile (1) présentant un émetteur de lumière (2) qui peut être commandé par la première commande, le signal lumineux de l'émetteur de lumière étant modulé pour la transmission d'une information d'identité relative à la première partie mobile, qui peut être décodée par la commande, le premier élément mobile présentant un émetteur de son (3) qui peut être commandé par la première commande simultanément avec l'émetteur de lumière, la partie mobile supplémentaire (11) présentant un récepteur de lumière (12), qui est relié à la commande supplémentaire, la partie mobile supplémentaire présentant un récepteur de son (13), qui est relié à la commande supplémentaire, la commande supplémentaire étant conçue de manière appropriée pour déterminer la différence de temps entre l'arrivée au niveau du récepteur de son d'un signal sonore émis par l'émetteur de son et l'arrivée au niveau du récepteur de lumière d'un signal lumineux émis par l'émetteur de lumière, l'information d'identité étant modulée sur le signal lumineux et sur le signal sonore, un procédé duplex intégral ou semi-duplex est utilisé, la distance S entre la première partie et la supplémentaire est déterminée selon

$$S = T\_diff * v\_Schall$$

v_Schall étant la vitesse du son, T_diff étant la différence de temps déterminée entre l'arrivée du signal lumineux sur le récepteur de lumière du second dispositif et l'arrivée du signal sonore sur le récepteur de son du second dispositif, le récepteur de son étant conçu pour détecter l'amplitude sonore et, en particulier à partir de la commande, pour la distance déterminée S à partir d'un tableau, qui attribue des valeurs de distance respectives aux amplitudes sonores respectives, déterminer une valeur d'amplitude sonore, en particulier par interpolation, et effectuer un contrôle de plausibilité de la distance S déterminée en surveillant l'amplitude sonore détectée pour détecter un dépassement d'une mesure admissible de l'écart.

**2.** Installation selon la revendication 1, dans laquelle la première partie mobile et la partie mobile supplémentaire peuvent être déplacées respectivement sur une surface de déplacement de l'installation.

**3.** Installation selon la revendication 1, dans laquelle les première et seconde parties mobiles sont guidées par rails.

**4.** Installation selon l'une quelconque des revendications précédentes, dans laquelle un premier émetteur-récepteur pour la lumière de la première partie mobile agit en tant qu'émetteur de lumière, un émetteur-récepteur pour la lumière de la partie mobile supplémentaire agit en tant que récepteur de lumière.

**5.** Installation selon l'une quelconque des revendications précédentes, dans laquelle un premier émetteur-récepteur à ultrasons de la première partie mobile agit en tant qu'émetteur de son, un émetteur-récepteur à ultrasons supplémentaire de la partie mobile supplémentaire agit en tant que récepteur de son.

**6.** Procédé pour déterminer une distance, en particulier entre une première partie mobile et une partie mobile supplémentaire d'une installation selon l'une quelconque des revendications précédentes,

un signal lumineux étant émis par un émetteur de lumière d'un premier dispositif, un signal sonore étant émis par un émetteur de son du premier dispositif en même temps que le signal lumineux,

la différence de temps T_diff entre l'arrivée du signal lumineux sur un récepteur de lumière d'un second dispositif et l'arrivée du signal sonore sur un récepteur de son du second dispositif est déterminée,

la distance entre le premier et le second dispositif est déterminée à partir de la différence de temps T_diff, en particulier la distance entre le récepteur de son et l'émetteur de son est déterminée,

la distance S entre la première partie et la supplémentaire est déterminée selon

$$S = T\_diff* \; v\_Schall$$

v_Schall étant la vitesse du son,

T_diff étant la différence de temps déterminée entre l'arrivée du signal lumineux au niveau du récepteur de lumière du second dispositif et l'arrivée du signal sonore au niveau du récepteur de son du second dispositif,

une information d'identité relative au premier combiné, qui peut être décodée par la commande, est modulée sur le signal lumineux et sur le signal sonore,

dans lequel un procédé duplex intégral est utilisé,

en particulier par le récepteur de son, l'amplitude sonore est détectée et, en particulier par la commande, pour la distance déterminée S à partir d'un tableau qui attribue des valeurs de distance respectives à des amplitudes sonores respectives, une valeur pour l'amplitude sonore est déterminée, en particulier par interpolation, et un contrôle de plausibilité de la distance déterminée S est effectué, en surveillant l'amplitude sonore détectée, par rapport à un dépassement d'une mesure admissible de l'écart.

7. Procédé selon la revendication 6, dans lequel la première partie est une première partie mobile et la seconde partie est une seconde partie mobile ou la première partie est une partie mobile et la seconde partie est une partie stationnaire ou la première partie est une partie stationnaire et la seconde partie est une partie mobile ou la première partie est une partie stationnaire et la seconde partie est une partie stationnaire.

8. Procédé selon la revendication 6 ou 7,

dans lequel le signal lumineux et/ou le signal sonore est modulé, en particulier pour la transmission de données,

en particulier, dans lequel un procédé semi-duplex est utilisé.

9. Procédé selon l'une quelconque des revendications 6 à 8,

dans lequel un signal d'ondes électromagnétiques d'une autre fréquence est utilisé à la place du signal lumineux,

dans lequel un émetteur pour le signal d'ondes est utilisé à la place de l'émetteur de lumière et un récepteur pour le signal d'ondes est utilisé à la place du récepteur de lumière.

Fig. 1

Fig. 2

EP 3 867 723 B1

Fig. 3

EP 3 867 723 B1

Fig. 4

Fig. 5

EP 3 867 723 B1

Fig. 6

EP 3 867 723 B1

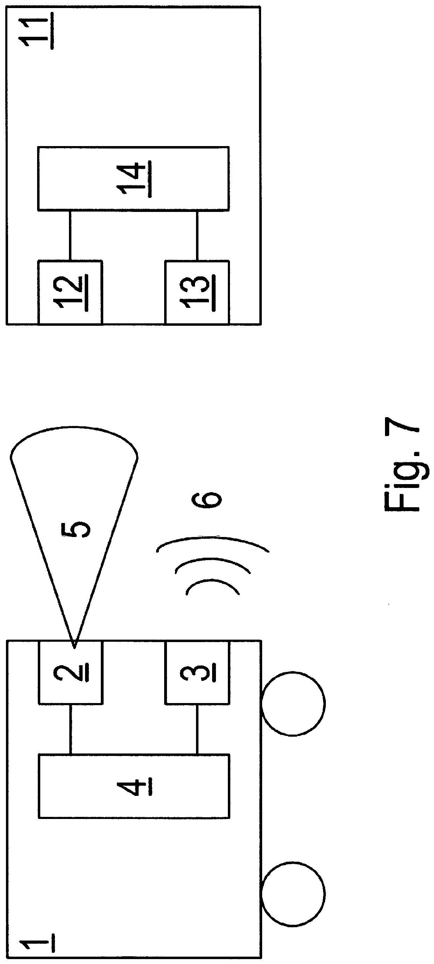

Fig. 7

EP 3 867 723 B1

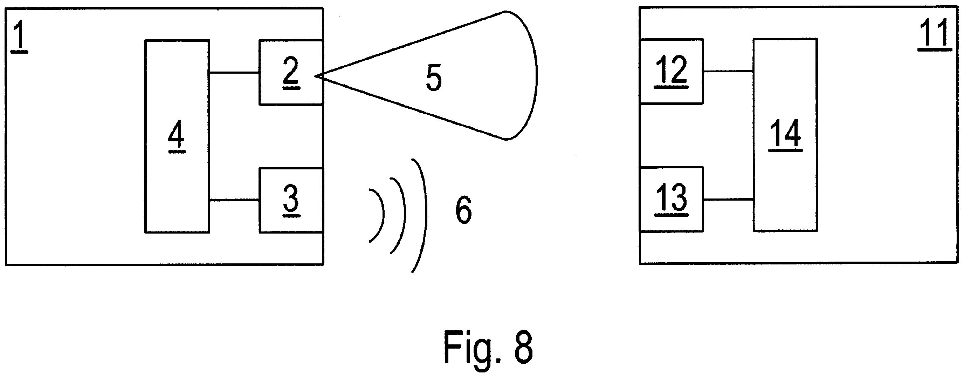

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004014281 A1
- DE 102016001678 A1
- US 20060136097 A1
- US 6680688 B1
- US 2011196580 A1
- US 2005060069 A1